# EUROPEAN PATENT APPLICATION

(11) **EP 1 496 684 A2**
(43) Date of publication of application: **12.01.2005**
(21) Application number: 04254125.0
(22) Date of filing: 09.07.2004
(51) Int. Cl.: H04N 1/387

(54) **Imaging apparatus, imaging method, imaging system, program**

(30) Priority: 11.07.2003 JP 2003273716
(71) Applicant: SONY CORPORATION, Tokyo (JP)
(72) Inventor: Hagita, Shoji, Shinagawa-Ku Tokyo (JP); Hama, Hideki, Shinagawa-Ku Tokyo (JP); Tsuchiya, Yuriko, Shinagawa-Ku Tokyo (JP); Takeda, Masae, Shinagawa-Ku Tokyo (JP); Muraoka, Yuki, Shinagawa-Ku Tokyo (JP)
(74) Representative: Leppard, Andrew John

(57) **Abstract**

Presence/absence of a movement between a first unit-image that constitutes the entire image representing the whole imaging area and a second unit-image that constitutes the previous entire image and that is located in the same imaging direction as the first unit-image is determined. When a movement exists between the first and second unit-images, imaging operations for the next entire image are performed with the imaging direction fixed to the first unit-image and its surrounding unit-images, and the imaged unit-images are recorded in the recording medium.

## Description

### BACKGROUND OF THE INVENTION

### Field of the Invention

The present invention relates to an imaging apparatus, an imaging method, an imaging system, and a program for imaging respective unit-images. In embodiments of the present invention, the respective unit-images constitute one entire image representing the whole imaging area for the purpose of monitoring the condition of a wide imaging area.

### Description of the Related Art

An electronic still camera, which has been widely used, is configured to: take an image of a subject to convert a light transmitted through a lens into an image signal by a solid-state image sensing device such as a CCD; record the image signal onto a recording medium; and reproduce the recorded image signal. Many of the electronic still cameras comprise a monitor capable of displaying the imaged still image, on which recorded still images can selectively be displayed. In this electronic still camera, the image signal to be supplied to the monitor corresponds to a subject for each screen, so that image area to be displayed at a time is limited, making it impossible to monitor the condition of a wide area at once.

Under the circumstances, a monitoring camera capable of monitoring the condition of a wide area is now in widespread use, in which a subject is imaged with the imaging direction of a camera sequentially shifted to obtain a panoramic entire image constituted by a plurality of unit-images. Particularly, in recent years, a technique of contracting/synthesizing a plurality of video signals into a video signal corresponding to one frame has been proposed (refer to, for example, Jpn. Pat. Appln. Laid-Open Publication No. 10-108163). Further, a centralized monitoring recording system which realizes a monitoring function by acquiring monitoring video images from a plurality of set up monitoring video cameras and recording them onto a recording medium such as a video tape has been proposed (refer to, for example, Jpn. Pat. Appln. Laid-Open Publication No. 2000-243062).

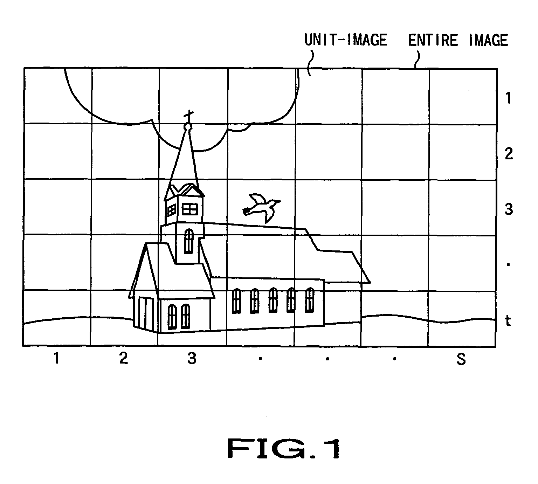

When the area as shown in, for example, FIG. 1, is imaged using the above conventional monitoring camera with a predetermined view angle, the imaging direction must be sequentially shifted in horizontal or vertical direction. Assuming that the size of the imaging area can be represented by a product of the size of the frame (hereinafter, referred to as unit-image) obtained by an imaging operations with a predetermined view angle and (s x t), at least (s x t) imaging directions must be set.

In practice, a subject is imaged with the imaging direction of the monitoring camera fixed, at first, to the upper left coordinate (1,1). Then, the imaging direction of the monitoring camera is sequentially shifted in the horizontal direction so that the coordinate shifts to (2,1), (3,1), (4,1) ··· (s,1). After imaging operations for the unit-images of the first line have been completed, the imaging direction is fixed to the coordinate (1,2) of the second line and the subject is imaged. Then, imaging operations are performed with the imaging direction of the camera again sequentially shifted in the horizontal direction. This operation is repeated until the coordinate (s,t) has been imaged. Thereafter, (s × t) unit-images are pasted to each other to synthesize an image representing the whole imaging area.

However, in the conventional monitoring camera as described above, in order to obtain one entire image, imaging operations must be performed for all (s × t) unit-images that constitute one entire image, which makes it impossible to capture, without fail, a slight variation that occurs in a short period of time within the imaging area.

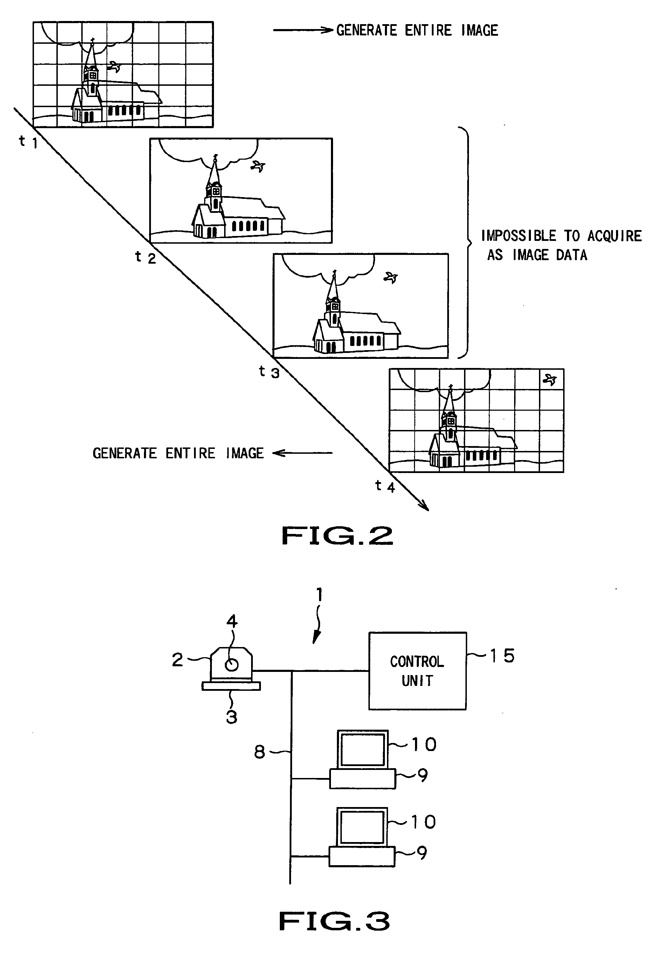

FIG. 2 shows a state where a moving subject (bird) with high movement speed gradually recedes from a building as the time elapses from time t1 to t4. When (s x t) unit-images that constitute the entire image are imaged at time t1 in FIG. 2, it is necessary that all unit-images that include unit-images representing a building or cloud, in which the subject is not included, be sequentially imaged, involving a great deal of time.

Therefore, in some cases, when the next timing the entire image is imaged, the time has already reached time t4. This makes it impossible to capture, as image data, the condition of the subject at time t2 and time t3, with the result that effectiveness of the monitoring performed using the monitoring camera cannot be obtained.

### SUMMARY OF THE INVENTION

The present invention has been made in view of the above situation. Embodiments of the present invention seek to provide an imaging apparatus, an imaging method, an imaging system, and a program, in which respective unit-images that constitute the entire image representing the whole imaging area are imaged for the purpose of monitoring the condition of a wide imaging area, and which are capable of sequentially generating the entire image in which a variation within the imaging area is captured at short time intervals in accordance with the movement of a subject.

In an imaging apparatus and method, an imaging system, a program in which the present invention is embodied, presence/absence of a movement between a first unit-image that constitutes the entire image representing the whole imaging area and a second unit-image in the same imaging direction as the first unit-image that constitutes the previous entire image is determined. When it is determined that a movement exists between the first and second unit-images, imaging operations for the next entire image are performed with the imaging direction fixed only to the first unit-image and unit-images surrounding the first unit-image.

According to a first aspect of the present invention, there is provided an imaging apparatus comprising: an imaging section which performs imaging operations with the imaging direction sequentially fixed to respective unit-images that constitute the entire image representing the whole imaging area; a recording section which records the imaged unit-image onto a recording medium; a difference detection section which detects a difference between a first unit-image that has newly been imaged and a second previous unit-image that has been stored in the recording medium and that is located at the same position as the first unit-image; and a controller which controls the imaging section, recording section, and difference detection section, wherein when a difference is detected between the first and second unit-images by the difference detection section, the imaging section newly performs imaging operations for the first unit-image and its surrounding unit-images, and the recording section sequentially records the unit-images that have been imaged by the imaging section onto the recording medium.

According to a second aspect of the present invention, there is provided an imaging method comprising: performing imaging operations with imaging direction sequentially fixed to respective unit-images that constitute the entire image representing the whole imaging area; recording the imaged unit-image onto a recording medium; detecting a difference between a first unit-image that has newly been imaged and a second previous unit-image that has been stored in the recording medium and that is located at the same position as the first unit-image; performing, when a difference is detected between the first and second unit-images, imaging operations for the first unit-image and its surrounding unit-images; and sequentially recording the newly imaged unit-images onto the recording medium.

According to a third aspect of the present invention, there is provided an imaging apparatus comprising: imaging means for performing imaging operations with imaging direction sequentially fixed to respective unit-images that constitute the entire image representing the whole imaging area; recording means for recording the imaged unit-image onto a recording medium; movement determination means for determining presence/absence of a movement between a first unit-image that has newly been imaged and a second unit-image that constitutes the previous entire image and that is located in the same imaging direction as the first unit-image; and control means for controlling at least the above respective means, wherein when it is determined that a movement exists between the first and second unit-images by the movement determination means, the imaging means performs imaging operations for the next entire image with imaging direction fixed to the first unit-image and its surrounding unit-images, and the recording means sequentially records, onto the recording medium, the unit-images that have been imaged in the above manner by the imaging means.

According to a fourth aspect of the present invention, there is provided an imaging method comprising: performing imaging operations with the imaging direction sequentially fixed to respective unit-images that constitute the entire image representing the whole imaging area; recording the imaged unit-image onto a recording medium; determining presence/absence of a movement between a first unit-image that has newly been imaged and a second unit-image that constitutes the previous entire image and that is located in the same imaging direction as the first unit-image; and performing, when a movement exists between the first and second unit-images, imaging operations for the next entire image with the imaging direction fixed to the first unit-image and its surrounding unit-images, and sequentially recording the unit-images that have been imaged in the above manner in the recording medium.

According to a fifth aspect of the present invention, there is provided an imaging system comprising: an imaging apparatus which performs imaging operations with imaging direction sequentially fixed to respective unit-images that constitute the entire image representing the whole imaging area; a control unit which records the unit-image imaged by the imaging apparatus in a recording medium, and determines presence/absence of a movement between a first unit-image that has newly been imaged and a second unit-image that constitutes the entire image and that is located in the same imaging direction as the first unit-image; and a user terminal which can access the recording medium, wherein when it is determined that a movement exists between the first and second unit-images by the control unit, the imaging apparatus performs imaging operations for the next entire image with the imaging direction fixed to the first unit-image and its surrounding unit-images, and the control unit sequentially records the unit-images that have been imaged in the above manner by the imaging apparatus onto the recording medium.

According to a sixth aspect of the present invention, there is provided a program which allows a computer to: perform imaging operations with imaging direction sequentially fixed to respective unit-images that constitute the entire image representing the whole imaging area; record the imaged unit-image onto a recording medium; determine presence/absence of a movement between a first unit-image that has newly been imaged and a second unit-image that constitutes the previous entire image and that is located in the same imaging direction as the first unit-image; perform, when a movement exists between the first and second unit-images, imaging operations for the next entire image with the imaging direction fixed to the first unit-image and its surrounding unit-images, and sequentially record the unit-images that have been imaged in the above manner in the recording medium.

As described above in detail, in embodiments of the present invention, presence/absence of a movement between a first unit-image that constitutes the entire image representing the whole imaging area and the second unit-image that constitutes the previous entire image and that is located in the same imaging direction as the first unit-image, is determined. When a movement exists between the first and second unit-images, imaging operations for the next entire image are performed with the imaging direction fixed to the first unit-image and its surrounding unit-images.

Therefore, it is possible to sequentially generate the entire image that captures a change within the imaging area at short time intervals in accordance with a movement of the imaged subject.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

The present invention will be described further, by way of example only, with reference to preferred embodiments thereof as illustrated in the accompanying drawings, in which:
FIG. 1 is a view for explaining an example of unit-images that constitute the panoramic entire image;
FIG. 2 is a view for explaining a problem associated with the prior art;
FIG. 3 is a view showing a configuration of the imaging system to which the present invention is applied;
FIG. 4 is a block diagram showing configurations of the camera unit and control unit;
FIG. 5 is a view for explaining the case where the imaging area surrounded by a heavy line is imaged using the camera unit with an imaging view angle u;
FIG. 6 is a view showing a configuration example of the screen display on the monitor;
FIG. 7 is a view showing the normal imaging mode and trace imaging mode in chronological order;
FIG. 8 is a flowchart for explaining in detail a procedure of movement detection in the movement detection section;
FIG. 9 is a flowchart for explaining in detail a procedure of mode switching controlled by the control section;
FIG. 10 is a view showing the unit-images to be movement-detected in steps S23 to S25;
FIG. 11 is a flowchart showing a procedure for storing the unit-image in the second memory; and
FIG. 12 is a flowchart showing a procedure for displaying the unit-image stored in the second memory on the monitor.

### DETAILED DESCRIPTION OF THE PREFERRED EMBODIMENTS

An embodiment of the present invention will be described below in detail with reference to the accompanying drawings. An imaging system 1 to which the present invention is applied comprises, as shown, for example, in FIG. 3, a camera unit 2 which takes an image of a subject to generate an image signal, a control section 15 which controls the camera unit 2 connected thereto, a terminal device 9 for a user to execute an application provided by the imaging system 1, a terminal display 10 connected to the terminal device 9, and a network 8 for exchanging various information between the control unit 15 and terminal device 9.

The camera unit 2 comprises a pan/tilt section 3 and camera section 4 which are integrally formed to each other. The pan/tilt section 3 serves as a rotating platform for arbitrarily changing the imaging direction with respect to, for example, two axes of pan and tilt.

The camera section 4 is disposed on the rotating platform constituting the pan/tilt section 3 and takes an image of a subject while horizontally and vertically adjusting the imaging direction under the control of the control unit 15. The camera section 4 sequentially changes the imaging view angle in accordance with the control of the control unit 15 to expand/contract the imaging magnification for imaging of a subject.

The control unit 15 is constituted by a PC (personal computer) or the like, and configured to record the image signal transmitted from the camera unit 2 onto a recording medium and display images generated from the image signal recorded in the recording medium to a user. The control unit 15 identifies the luminance component of the image signal transmitted from the camera unit 2 to determine presence/absence of a movement, and controls the camera unit 2 to switch imaging modes based on a result of the determination. Further, the control unit 15 serves as a so-called central control unit for controlling the entire network 8, and is configured to transmit image data or voice data in accordance with a request from the terminal device 9.

The network 8 is a public telecommunication network in which data can be exchanged bi-directionally, such as the Internet network connected to the control unit 15 via a phone line, or ISDN (Integrated Services Digital Network)/B (broadband)-ISDN connected to TA or modem. Incidentally, when the imaging system 1 is operated in a given restricted area, the network 8 may be configured as a LAN (Local Area Network). Further, the network 8 may be configured to transmit moving images as well as still images. In this case, moving image data including, for example, MPEG (Moving Picture Experts Group) data is continually transmitted using a channel, and still image data is transmitted using another channel at given time intervals, based on IP (Internet Protocol). A network server (not shown) may be connected to the network 8. The network server (not shown) manages, for example, Internet information, and transmits predetermined information that has been stored therein based on a request received from the terminal device 9.

The terminal device 9 is a PC for a user at home or in the office to acquire images from the control unit 15 via the network 8 and execute desired processing. Connecting a plurality of the terminal devices 9 to the network 8 allows simultaneous provision of an application of the imaging system 1 to a plurality of users. The terminal device 9 displays the images acquired from the control unit 15 on the terminal display 10. Further, the terminal device 9 generates a request signal in accordance with user's designation operation and transmits it to the control unit 15. An explanation of the configuration of the terminal device 9 is available from that of the control unit 15 (to be described later), and it is omitted here.

Next, configurations of the camera unit 2 and control unit 15 in the imaging system 1 to which the present invention is applied will be described in detail.

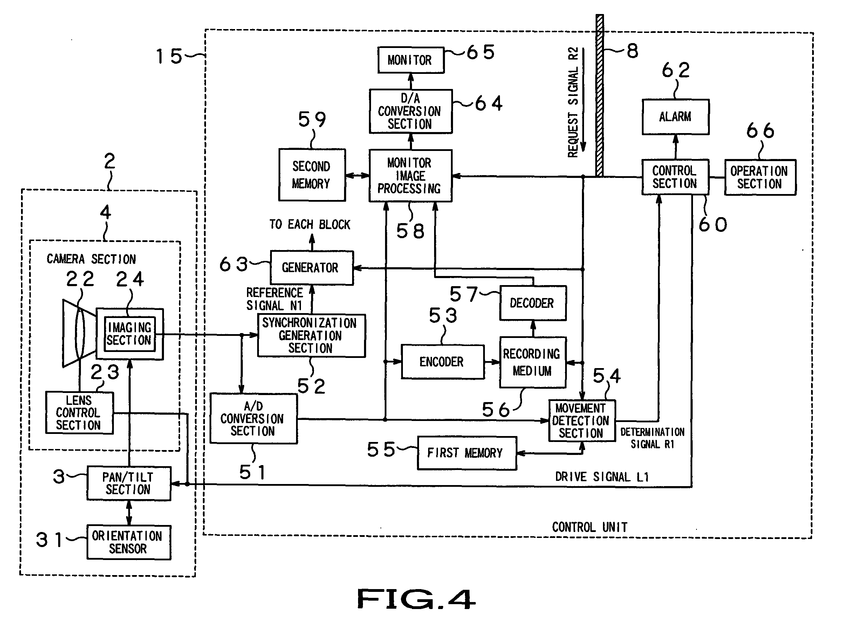

FIG. 4 is a block diagram showing configurations of the camera unit 2 and control unit 15. In FIG. 4, the pan/tilt section 3 constituting the camera unit 2 includes a tilt section and a pan section which control the rotating platform for changing the imaging direction. To the pan/tilt section 3, information related to the position and angle of the camera section 4 is transmitted from an orientation sensor 31 connected to the pan/tilt section 3. The camera section 4 constituting the camera unit 2 includes lens control section 23 for mainly changing a view angle of a lens section 22, and an imaging section 24 disposed at a position perpendicular to an optical axis of the lens section 22.

The control unit 15 includes: an A/D conversion section 51 and a synchronization generation section 52 which are connected to the imaging section 24 via, for example, an IEEE 1394 interface; an encoder 53 and a movement detection section 54 which are connected to the A/D conversion section 51; a first memory 55 which temporarily stores the image transmitted from the movement detection section 54; a recording medium 56 which stores the image output from the encoder 53; a decoder 57 which expands the image read out from the recording medium 56; a monitor image processing section 58 which is connected to the A/D conversion section 51 and decoder 57 and which creates the image that is displayed for a user; and a second memory 59 which temporarily stores the image supplied from the monitor image processing section 58 connected thereto.

The control unit 15 further includes: a control section 60 which transmits a drive signal L1 to the camera unit 2 based on a determination signal R1 supplied from the movement detection section 54, or executes predetermined processing for the monitor image processing section 58; an alarm 62 which draws user's attention by voice under the control of the control section 60 connected thereto; a generator 63 which is connected to the synchronization generation section 52 and which generates various pulses required for the control unit 15; a D/A conversion section 64 which analog-converts the signal input from the monitor image processing section 58 connected thereto; a monitor 65 which is connected to the D/A conversion section 64 and which is constituted by a liquid crystal display surface or the like: and an operation section 66 for a user to designate a desired image area or position on the image displayed on the monitor 65.

The pan/tilt section 3 rotates a stepping motor configured as a driving source of the rotating platform based on the drive signal L1 from the control section 60, which allows the rotating platform to be rotated vertically or horizontally. Therefore, it is possible to change the imaging direction of the camera section 4 located on the rotating platform in the vertical direction or horizontal direction.

The lens control section 23 performs auto aperture control operation or autofocus control operation for the lens section 22 based on the drive signal from the control section 60. Further, based on the drive signal, the lens control section 23 changes the imaging view angle relative to a subject. The above functions of the lens control section 23 allows the camera section 4 to take an image of a subject while sequentially adjusting the imaging magnification.

The imaging section 24 is constituted by, for example, a solid-state image sensing device such as a CCD (Charge Coupled Device) and allows the subject image passed through the lens section 22 to be focused on an imaging surface to generate an image signal through photoelectric conversion. The imaging section 24 transmits the generated image signal to the A/D conversion section 51.

The A/D conversion section 51 digitizes the image signal transmitted from the imaging section 24 and transmits the digitized image signal to the encoder 53, movement detection section 54, and monitor image processing section 58. The synchronization generation section 52 extracts the synchronization from the imaging section 24 and generates a reference signal N1 based on the extracted synchronization. The synchronization generation section 52 outputs the generated reference signal N1 to the generator 63.

The encoder 53 compresses/encodes an image signal according to a picture encoding standard such as JPEG (Joint Photographic Experts Group). Incidentally, the encoder 53 may add position information or meta data to the image signal to be compressed/encoded. The encoder 53 outputs the compressed/encoded image signal to the recording medium 56. Note that when compression/encoding of the image signal to be supplied is not necessary, the processing in the encoder 53 is omitted.

The recording medium 56 is applied as, for example, a hard disk, a detachable disk recording medium, or the like, and is configured to sequentially record the image signal output from the encoder 53 with the image signal related to the position information or meta data. The image signal recorded in the recording medium 56 is read out based on the control of the control section 60, followed by being transmitted to the decoder 57. Note that the image signal recorded in the recoding medium 56 may be recorded on a memory card (not shown). In this case, image signal can be moved to another PC through the memory card that has stored the image signal. Further, the image signal recorded in the recording medium 56 may be recorded on the aforementioned network server (not shown). In this case, the network server can be used as a substitute for the recording medium 56.

The decoder 57 expands the JPEG image signal read out from the recording medium 56, and transmits it to the monitor image processing section 58.

The movement detection section 54 compares each luminance component of the image signal that is newly transmitted from the A/D conversion section 51 with each luminance component of the image signal that has been stored in the first memory 55. When the difference value of the luminance components compared between the two exceeds a predetermined threshold value, the movement detection section 54 determines that a movement exists between the two image signals. On the other hand, when the difference value of the luminance components compared between the two falls below a predetermined threshold value, the movement detection section 54 determines that no movement exists between the two image signals. The movement detection section 54 transmits a determination signal R1 indicating the determination result to the control section 60 and allows the image signal newly transmitted from the A/D conversion section 51 to be sequentially stored in the first memory 55.

The first memory 55 stores the image signal transmitted from the movement detection section 54 connected thereto at a predetermined address. The image signal that has been stored in the first memory 55 is sequentially read out under the control of the movement detection section 54, followed by being compared with the image signal to be transmitted later from the A/D conversion section 51 with respect to the luminance component.

The monitor image processing section 58 performs picture processing based on the image signal transmitted from the A/D conversion section 51 or decoder 57 under the control of the control section 60 to display the pictorialized image on the monitor 65. The monitor image processing section 58 controls contrast and luminance of the monitor 65 based on the control of the control unit 60. Further, when it is determined by the movement detection section 54 that a movement exists, the monitor image processing section 58 performs processing such as insertion of a marker into the image displayed on the monitor 65, or the like. The monitor image processing section 58 cooperates with the second memory 59 to reduce pixels in order to simultaneously display a plurality of images on a liquid crystal display surface of the monitor 65.

The monitor 65 is constituted by a liquid crystal display, a backlight and the like (which are not shown), and serves as an interface through which a user views imaged images. Lighting from the backlight on the back side of the liquid crystal display increases visibility of the entire monitor 65.

The control section 60 transmits, based on a designation of the image area or position made by a user through the operation section 66, the drive signal L1 for driving the pan/tilt section 3 or lens control section 23 and a control signal for controlling each component in the control unit 15. The control section 60 receives a predetermined request signal R2 from the terminal device 9 via the network 8, accordingly selects the best suited still image, moving image, or various information that has been recorded in the recording medium 56 and transmits it to the terminal device 9. Further, based on the determination signal R1 received from the movement detection section 54, the control section 60 controls the monitor image processing section 58, transmits the drive signal L1 to the camera unit 2, or performs predetermined control processing for the monitor image processing section 58.

The operation section 66 is constituted by a keyboard, mouse, and the like for a user to designate a desired imaging area or position on the image displayed on the monitor 65.

The generator 63 controls, based on the reference signal N1 supplied from the synchronization generation section 52, a timing of display processing when the image that has been imaged by the camera unit 2 is displayed on the monitor 65. The generator 63 also controls, based on the reference signal generated therein, a timing of display processing when the image that has been stored in the recording medium 56 is displayed on the monitor 65.

An imaging operation in the imaging system 1 to which the present invention is applied will next be described below.

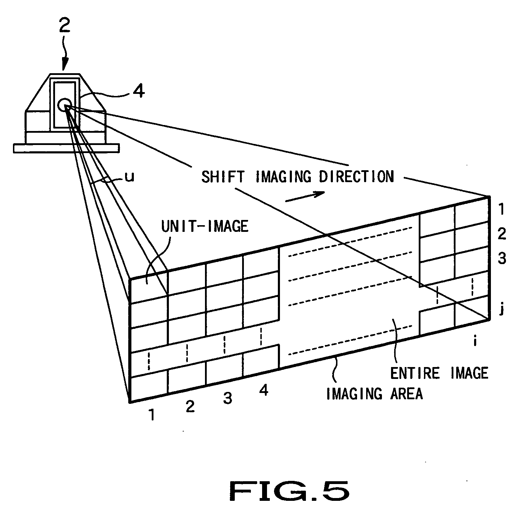

FIG. 5 shows the case where the imaging area surrounded by a heavy line is imaged using the camera unit 2 with an imaging view angle u. In order to image the whole imaging area with the imaging view angle u, the imaging direction must sequentially be shifted in the horizontal or vertical direction. Assuming that the size of the imaging area can be represented by a product of the size of the frame (hereinafter, referred to as unit-image) obtained by an imaging operations with an arbitrary imaging view angle u and (i × j), at least (i × j) imaging directions must be set. The (i × j) unit-images that have been imaged with the imaging view angle u are pasted to each other to synthesize the entire image representing the whole imaging area.

For the coordinate (M,N) of each unit-image, the coordinate in the horizontal direction is assumed to be 1, 2, ··M·, i, starting from the left extremity of the whole imaging area, and the coordinate in the vertical direction is assumed to be 1,2, ··N·, j, starting from the upper extremity of the whole imaging area. In this case, the control section 60 transmits the drive signal L1 to the pan/tilt section 3 to allow the imaging direction of the camera section 4 to be fixed at first to the upper left coordinate (1,1). The image signal generated based on the unit-image corresponding to the coordinate (1,1) is A/D converted through the A/D conversion section 51, followed by being stored in the first memory 55 through the movement detection section 54, and at the same time, being also stored in the second memory 59 through the monitor image processing section 58. Further, the image signal is sequentially stored in the recording medium 56 after being compressed/encoded according to JPEG standard in the encoder 52 with meta data or the like being added thereto.

Next, the control section 60 transmits the driving signal L1 to the pan/tilt section 3 in a similar fashion as above to allow the imaging direction of the camera section 4 to be shifted by one image frame in the right direction. As a result, the next imaging operation is performed for the unit-image corresponding to the coordinate (2,1). The image signal generated by the imaging operation performed for the unit-image corresponding to the coordinate (2,1) is also recorded onto the recording medium 56. Thereafter, the camera section 4 performs imaging operations while horizontally shifting the imaging direction in series to allow the coordinate to be shifted to (3,1), (4,1), ··(i,1) under the control of the control section 60.

After imaging operations for the unit-images of the first line have been completed, the camera section 4 fixes the imaging direction to the coordinate (1,2) of the second line based on the control of the control section 60 and performs next imaging operation. Thereafter, the camera section 4 performs imaging operations with the imaging direction shifted horizontally in series. This operation is repeated until a unit-image corresponding to the coordinate (i,j) has been imaged. In this state, the image signals corresponding to (i × j) unit-images that have been imaged for each coordinate are recorded in the first memory 55, second memory 59, and recording medium 56, respectively. Incidentally, after a unit-image corresponding to the coordinate (i,j) has been imaged, the control section 60 transmits the driving signal L1 to the pan/tilt section 3 to allow the imaging direction of the camera section 4 to again fix to the upper left coordinate (1,1) so as to perform imaging operations for the entire image in the next timing.

Incidentally, imaging order of the unit-image is not limited to the above example. For example, after imaging operations for the unit-images of the first line have been completed, the camera section 4 may shift the imaging direction to the coordinate (i,2) to perform an imaging operation, and may shift, for the next imaging operations, the imaging direction toward the coordinate (1,2).

The image signal generated based on the each unit-image recorded in the second memory 59 is sequentially read out by the monitor image processing section 58, followed by being contracted so as to suit the size of the display screen of the monitor 65. The each contracted unit-image is displayed on the monitor 65 through the D/A conversion section 64. By displaying all of the (i × j) unit-images recorded in the second memory 59 on the monitor 65, one panoramic entire image is synthesized. By performing the aforementioned imaging operation at given intervals, the entire image representing the latest condition of the imaging area can be acquired.

When the control section 60 designates that the unit-images that have previously been recorded in the recording medium 56 are displayed on the monitor 65, the image signals corresponding to the unit-images are sequentially read out from the recording medium 56. The read out image signals are then expanded through the decoder 57, followed by being transmitted to the monitor image processing section 58. The resultant image signals are contracted in the monitor image processing section 58 so as to suit the size of the display screen as described above. As a result, one synthesized panoramic entire image is displayed.

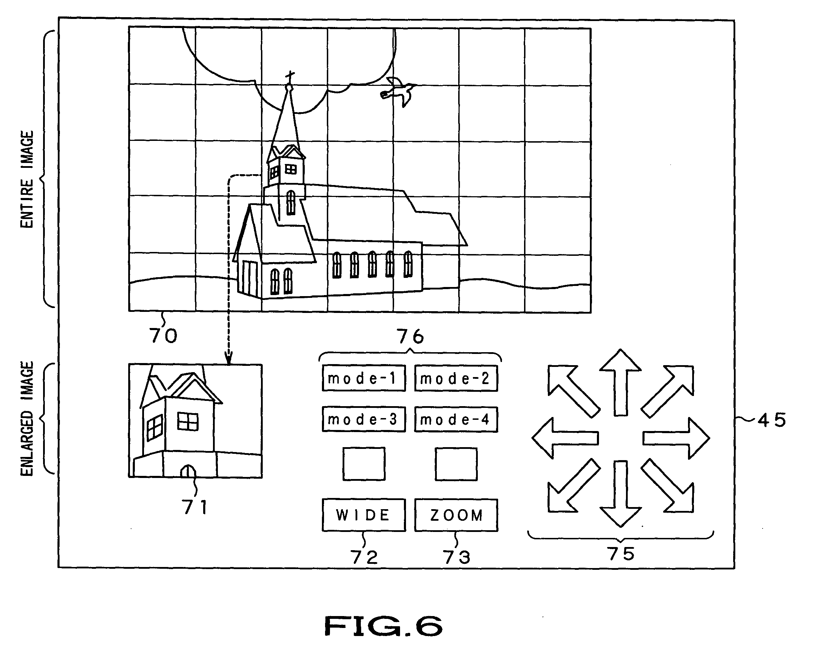

FIG. 6 shows an example of the state where the entire image synthesized by pasting the (i × j) imaged unit-images is displayed on an entire image display section 70 of the monitor 65. Note that the control unit 15 may allow the entire image display section 70 to display the entire image having lines between the unit-images or in a seamless manner. Further, the control unit 15 may allow the entire image display section 70 to display one entire image that has been imaged with an imaging view angle that can capture the whole imaging area as a substitute for the panoramic entire image.

Incidentally, an enlarged image display section 71 for displaying an enlarged image obtained by enlarging one unit-image is further provided on the display screen 45. The enlarged image display section 71 may display in an enlarged manner one unit-image that has been selected, by a user, from the unit-images constitute the entire image displayed on the entire image display section 70. Alternatively, the enlarged image display section 71 may display moving image based on the imaging direction for the one unit-image. This allows a user to check in real time the condition related to the imaging direction for the one unit-image that the user has selected.

Also displayed on the display screen 45 are a WIDE button 72 for reducing magnification of the unit-image being displayed on the enlarged image display section 71, a ZOOM button 73 for enlarging magnification of the unit-image, an imaging direction control section 75 for horizontally or vertically controlling the imaging direction of the camera section 4, a setup button 76 for setting various modes and allowing a server to record the image signal corresponding to each unit-image at a desired address, and the like.

A user can designate a desired image area or position on the entire image display section 70 and the enlarged image display section 71 by means of the operation section 66. Note that on each of the entire image display section 70 and enlarged image display section 71, aiming lines or pointer moving with the motion of a mouse or the like in the operation section 66 may be displayed for a user to execute the aforementioned designation operation.

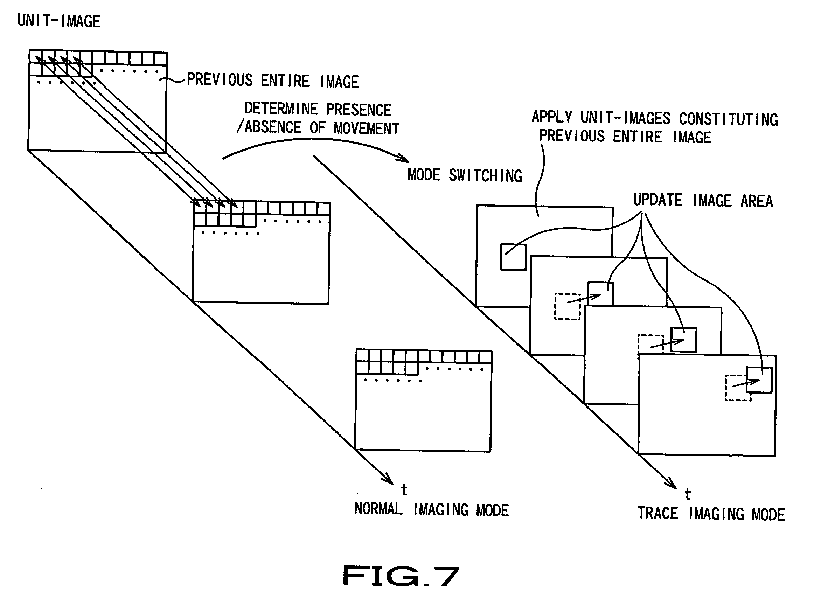

The imaging system 1 to which the present invention is applied can automatically switch between two modes. One is a normal imaging mode in which the entire image representing the whole imaging area is synthesized by pasting the (i × j) unit-images that has been imaged as described above. The other is a trace imaging mode in which the movement of a moving subject such as a bird displayed on the entire image display section 70 of FIG. 6 is captured as image signals without fail by generating the entire image at short time intervals. FIG. 7 shows the normal imaging mode and trace imaging mode in chronological order. In the normal imaging mode, imaging operations are performed with the imaging direction sequentially fixed to all of the respective unit-images constitute the entire image. Accordingly, it takes a long time until one entire image has been synthesized, resulting in a decreased number (hereinafter, referred to as refresh rate) of the entire image that can be generated in a unit of time.

On the other hand, in the trace imaging mode, imaging operations are performed with the imaging direction fixed to only the unit-images in which the moving subject may exist (the image area consists of the unit-images in which the moving subject may exist is hereinafter referred to as update imaging area). That is, in this trace imaging mode, only newly imaged unit-images constitute the update imaging area are used for update, and the unit-images constitute the previous entire image are applied to the remaining unit-images, thereby synthesizing one entire image. The control unit 15 detects the movement of a moving subject every time the entire image is synthesized to re-specify the update imaging area.

That is, in the trace imaging mode, it is only necessary that the imaging direction be sequentially fixed to only the unit-images constitute the update imaging area that has captured a moving subject. Accordingly, one entire image can be synthesized in a short period of time, thereby increasing the refresh rate.

The imaging system 1 to which the present invention is applied is configured to enter the normal imaging mode at first when the imaging operation for a subject is started. On this occasion, as shown in FIG. 7, the movement detection section 54 determines presence/absence of a movement between one unit-image that has newly been imaged and another unit-image that constitutes the previous entire image and that has imaged in the same imaging direction as the unit-image that has newly been imaged. When it is determined by the movement detection section 54 that a movement exits between the two unit-images, the mode is switched from the normal imaging mode to trace imaging mode. On the other hand, it is determined by the movement detection section 54 that no movement exits between the two unit-images, the imaging operation according to the normal imaging mode continues.

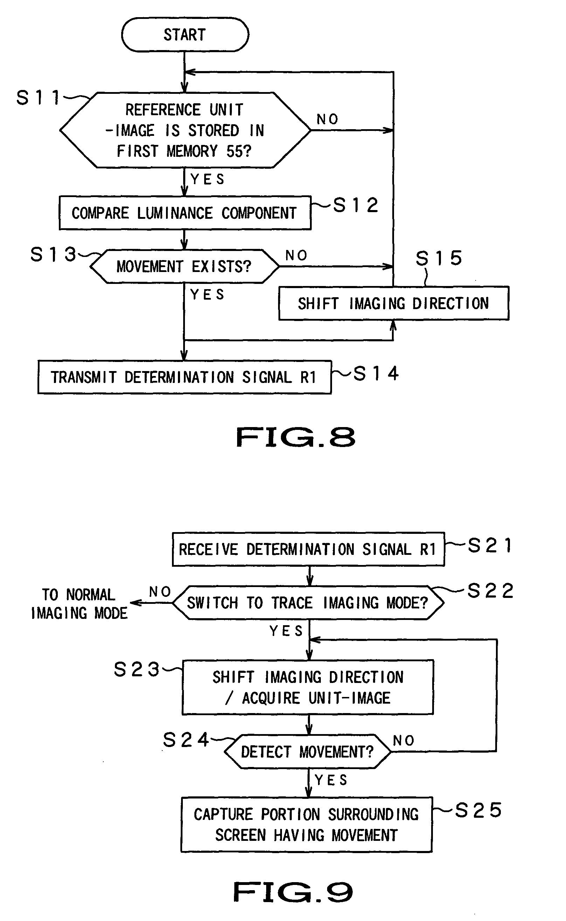

FIG. 8 is a flowchart for explaining in detail a procedure of movement detection in the movement detection section 54. First, in step S11, the movement detection section 54 receives one unit-image that has newly been imaged by the camera unit 2 from the A/D conversion section 51. Then, the movement detection section 54 checks whether another unit-image (hereinafter, referred to as reference unit-image) that constitutes the previous entire image and that has been imaged in the same imaging direction as the unit-image that has newly been imaged, is stored in the first memory 55. When the corresponding reference unit-image is stored in the first memory 55, the procedure advances to step S12. On the other hand, when a newly imaged unit-image is the unit-image that has been imaged for the first time, that is, the corresponding reference unit-image does not exist in the first memory 55, the procedure advances to the imaging operation for the next unit-image.

The procedure advances to step S12 and the movement detection section 54 compares the luminance component between the newly imaged unit-image and the corresponding reference unit-image. More specifically, the movement detection section 54 calculates a differential absolute value of the luminance component for each corresponding pixel of the two unit-images to be compared.

The procedure advances to step S 13, and the movement detection section 54 compares the calculated differential absolute value and a predetermined threshold value. When the calculated differential absolute value does not exceed the threshold value, the procedure advances to step S 14, where the movement detection section 54 transmits the determination signal R1 indicating presence of a movement to the control section 60. On the other hand, when the calculated differential absolute value exceeds the threshold value, the movement detection section 54 determines that no movement exists between the unit-images, and the procedure advances to step S 15. In each case, the newly imaged unit-image is stored in the first memory 55, and used as the reference unit-image, that is, its luminance component is referred to when the unit-image that constitutes the next entire image and that has been imaged in the same imaging direction is imaged.

When the procedure advances to step S 15, a new unit-image is imaged by the camera unit 2 with the imaging direction shifted. Thereafter, processing in steps S 11 to S13 is again executed.

The control section 60 receives the determination signal R1 indicating presence of a movement from the movement detection section 54 and controls the camera unit 2 and the control unit 15 to switch from the normal imaging mode to trace imaging mode. FIG. 9 is a flowchart for explaining in detail a procedure of mode switching controlled by the control section 60.

First, in step S21, the control section 60 identifies the details of the determination signal R1 received from the movement detection section 54.

Thereafter, the procedure advances to step S22 and the control section 60 determines whether the normal imaging mode is continued or switched to the trace imaging mode based on the identified details of the determination signal R1. When the received determination signal includes information indicating presence of a movement, the control section 60 determines to switch from the normal imaging mode to trace imaging mode, and the procedure advances to step S23.

In step S23, the control section 60 transmits, to the camera unit 2, the drive signal L1 for continuing imaging of unit-image with the imaging direction sequentially shifted. The imaged unit-image is sequentially supplied to the movement detection section 54, where the luminance component thereof is compared with that of the corresponding reference unit-image (step S24). The movement detection section 54 calculates a differential absolute value of the luminance component for each corresponding pixel of the two unit-images to be compared, and compares the calculated differential absolute value and threshold value so as to sequentially determine presence/absence of a movement. That is, movement detection is also made in this step S24, which can identify more accurately the unit-image that is determined to have a movement, among all unit-images that correspond to the entire image.

When the unit-image that has been determined to have a movement exists in step S24, the procedure advances to step S25. In step S25, imaging operations are performed for the next entire image with the imaging direction fixed to only the unit-image having a movement and its surrounding unit-images. On the other hand, the unit-image that has been determined to have a movement does not exist in step S24, the procedure returns to step S23.

Note that the processing in steps S23 and S24 may be omitted. In this case, when the movement is detected in step S 13, the procedure directly advances to step S25.

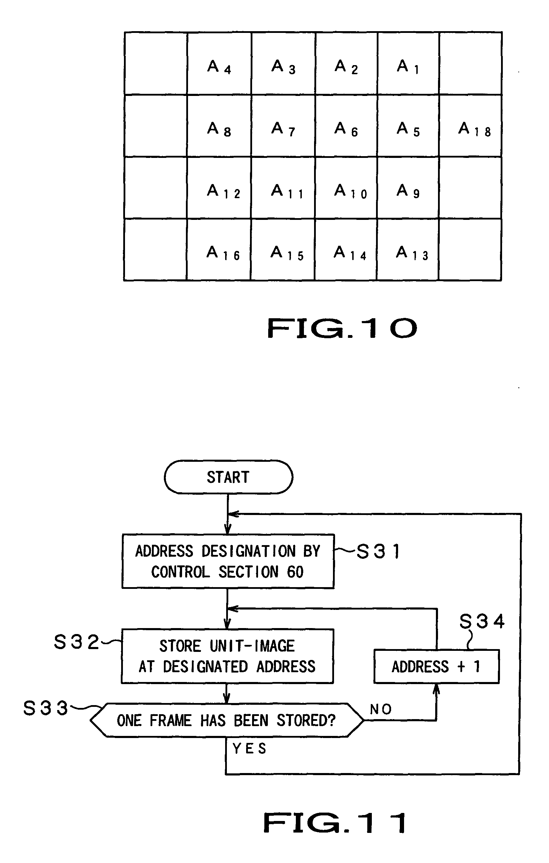

FIG. 10 shows unit-images to be movement-detected in steps S23 to S25. Unit-images A5, A6 and A 18, which have been imaged in step S23, are compared with corresponding reference unit-images, respectively. As a result, a movement has not been detected between the unit-images A5, A 18 and the corresponding reference unit-images, respectively. Whereas, since a moving subject exists in the unit-image A6, a movement has been detected between the unit-image A6 and corresponding reference unit-image. Accordingly, the procedure advances to step 525.

In step S25, the imaging system 1 performs imaging operations with the imaging direction sequentially fixed to only the unit-images that constitute the update imaging area, that is, the unit-image A6 and its surrounding unit-images A1, A2, A3, A5, A7, A9 A10, and A11. In this case, the imaging system 1 performs imaging operations in the order as if the unit-image A6 is surrounded, that is, in the order of A7, A11, A10, A9, A5, A6, A7, A3, A2, A1, A5, A6···. However, imaging order is not limited to this, and imaging operations may be performed in any order.

When the entire image including the aforementioned update imaging area is synthesized, the unit-images that constitute the previous entire image are applied to the remaining unit-images. The synthesized unit-images are displayed on the entire image display section 70 of the monitor 65, or stored in the recording medium 56 with the unit-images being associated with each other. The imaged unit-images that constitute the update imaging area are sequentially compared to the corresponding reference unit-images for determination of presence/absence of a movement by the movement detection section 54.

When a moving subject moves to a unit-image A11 in the next moment, it is determined whether a movement exists between the newly imaged unit-image A11 and corresponding reference unit-image. In this case, in addition to the unit-image A6 between which and the corresponding reference unit-image a movement has been detected, the unit-image A11, and its surrounding unit-images A 1 to A16 are set as the unit-images that constitute the update imaging area of the next entire image. The imaging system 1 performs imaging operations in the order as if the unit-images A6 and A11 are surrounded, that is, in the order of A10, A9, A13, A14, A15, A16, A12, A11, A10, A9, A5, A6, A7, A8, A4, A3, A2, A1, A5, A6···. However, the imaging order is not limited to this, and imaging operations may be performed in any order. The imaged unit-images that constitute the update imaging area are sequentially compared to the corresponding reference unit-images by the movement detection section 54 for determination of presence/absence of a movement.

When a moving subject has completely moved to the unit-image A11 in the next moment, and no movement exists between the unit-image A6 and the corresponding reference unit-images, only the unit-image A11 between which and the corresponding reference unit-image a movement has been detected and its surrounding unit-images A6, A7, A8, A10, A12, A14, A15, and A16 are set as the update imaging area. In this case, the imaging system 1 performs imaging operations in the order as if only the unit-image A11 is surrounded, that is, in the order of A7, A8, A12, A11, A10, A14, A15, A16, A12, A11, A10, A6, A7, A8, A12, A11···. However, imaging order is not limited to this, and imaging operations may be performed in any order.

As described above, only the unit-image between which and the corresponding reference unit-image a movement has been detected and its surrounding unit-images are identified as the update imaging area. On that basis, presence/absence of a movement between the newly imaged unit-image that constitutes the update imaging area and the corresponding reference unit-image is then determined. As a result, even when a moving subject moves from A6 to A11, it is possible to always identify the update imaging area in which the moving subject exists. Further, since imaging operations are performed for only the unit-images that constitute the update imaging area, the number of imaging operations required for generating one entire image can be reduced.

For example, in the normal imaging mode, (i × j) unit-images that constitute the entire image are imaged, whereas in the trace imaging mode, only 9 unit-images are imaged for one entire image. Accordingly, the time required for generating one entire image can be reduced to the order of 9/(i × j), allowing immediate transition to the imaging operation for the next entire image. As a result, refresh rate can significantly be increased.

Further, the increase in refresh rate allows the movement of a moving subject that moves across the imaging area to be captured at short time intervals, making it possible to capture, without fail, a slight variation that occurs in a short period of time within the imaging area.

In particular, the unit-images that constitute the entire image are sequentially recorded onto the recording medium 56 in chronological order as shown in FIG. 7, in the imaging system 1 to which the present invention is applied. Therefore, a user can later analyze the image by means of the control unit 15. Further, other users can later analyze the image by simultaneously accessing the recording medium through the network 8.

Note that the method for identifying the update imaging area is not limited to the above embodiment. For example, in addition to the unit-image A11 between which and the corresponding reference unit-image a movement has been detected, only unit-images A6, A8, A14, and A16 may be identified as the update imaging area. Alternatively, in addition to the unit-image A11 between which and the corresponding reference unit-image a movement has been detected, only unit-images A7, A10, A12, and A 15 are identified as the update imaging area. That is, any unit-image can be included in the update imaging area as long as it is located around the unit-image A11 between which and the corresponding reference unit-image a movement has been detected.

Among the unit-images that has been imaged as described above, the unit-image that has been transmitted to the monitor image processing section 58 are temporarily stored in the second memory 59, followed by being contracted so as to suit the size of the entire image display section 70 on the monitor 65.

FIG. 11 shows a procedure for storing the unit-image in the second memory 59.

First, in step S31, when the unit-image is transmitted from the A/D conversion section 51 to the monitor image processing section 58, the control section 60 designates the address at which the unit-image is stored in the second memory 59.

The procedure advances to step S32, and the image signal representing the transmitted unit-image is stored at the address of the second memory 59 that has been designated by the control section 60 based on the timing controlled by the generator 63.

Thereafter, the procedure advances to step S33, and it is determined whether one frame unit-image has been stored in the second memory 59. When it is determined that the one frame unit-image has not yet been stored in the second memory 59, the procedure advances to step S34, where 1 is added to the address of the second memory 59 at which the one frame unit-image is stored. Subsequently, the processing in step S32 is again executed. On the other hand, when the unit-image has been stored in the second memory 59, the procedure returns to step S31, and storage of the next unit-image into the second memory 59 is started.

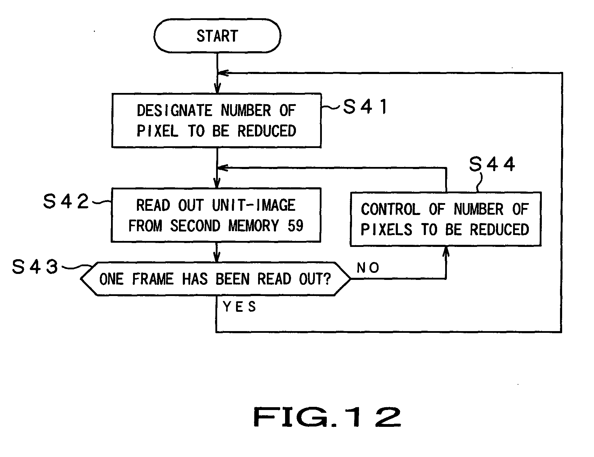

FIG. 12 is a flowchart showing a procedure for displaying the unit-image stored in the second memory 59 on the monitor 65.

First, in step S41, the control section 60 designates the amount of pixel to be reduced for the unit-image stored in the second memory 59 so as to allow the size of the unit-image to suit the size of the entire image display section 70 on the monitor 65.

The procedure then advances to step S42, and the image signal corresponding to the unit-image that has been stored at the designated address of the second memory 59 is read out based on the timing controlled by the generator 63.

Thereafter, the procedure advances to step S43, and it is determined whether one frame unit-image has been read out from the second memory 59. When it is determined that the one frame unit-image has not yet been read out from the second memory 59, the procedure advances to step S44. After the number of pixels to be reduced is controlled for the unit-image stored in the second memory 59 in this step S44, readout operation in step S42 is again performed. On the other hand, when it is determined that one frame unit-image has been read out from the second memory 59, the procedure returns to step S41, and readout operation of the next unit-image is started.

The present invention is not limited to the above embodiment. For example, the predetermined threshold value for use in comparison with the differential absolute value of the luminance component when presence/absence of a movement is determined by the movement detection section 54 may freely be adjusted by the control section 60 or user's operation through the operation section 66. This allows degree of movement detection to be freely changed. As a result, it is possible to prevent a slight variation in the luminance of a portion other than a moving subject from being determined as a movement. Further, color component may be used for movement detection in place of luminance component.

Further, the control section 60 may transmit the drive signal L 1 to the pan/tilt section 3 so as to reduce the shift amount of the imaging direction in the horizontal or vertical direction so that unit-images imaged by the camera unit 2 are overlapped with each other. As a result, a moving subject can always be located near the center of the unit-images.

Further, in the imaging system 1 according to embodiments of the present invention, it is possible to transmit the entire image or enlarged image to a user of the terminal device 9 and to send back the enlarged image to the terminal device 9 in accordance with the imaging area designated by the terminal device 9. That is, in the imaging system 1 according to embodiments of the present invention, it is possible to select the appropriate unit-image and to transmit it to the user operating the terminal device 9 connected to the network 8 in addition to a user operating the control unit 15. Further, when a plurality of the terminal device 9 are connected to the network 8, unit-images can be transmitted to a plurality of users at a time.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

It is needless to say that the present invention can be applied to a program for allowing a computer to execute the aforementioned processing.

In embodiments, presence/absence of a movement between a first unit-image that constitutes the entire image representing the whole imaging area and a second unit-image that constitutes the previous entire image and that is located in the same imaging direction as the first unit-image is determined. When a movement exists between the first and second unit-images, imaging operations for the next entire image are performed with the imaging direction fixed to the first unit-image and its surrounding unit-images, and the imaged unit-images are recorded in the recording medium.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. An imaging apparatus comprising:
an imaging section which performs imaging operations with the imaging direction sequentially fixed to respective unit-images that constitute the entire image representing the whole imaging area;
a recording section which records the imaged unit-image onto a recording medium;
a difference detection section which detects a difference between a first unit-image that has newly been imaged and a second previous unit-image that has been stored in the recording medium and that is located at the same position as the first unit-image; and
a controller which controls the imaging section, recording section, and difference detection section, wherein
when a difference is detected between the first and second unit-images by the difference detection section, the imaging section newly performs imaging operations for the first unit-image and its surrounding unit-images, and
the recording section sequentially records the unit-images that have been imaged by the imaging section onto the recording medium.

2. The imaging apparatus according to claim 1, wherein the entire image is newly formed by using the newly imaged unit-images for update among the unit-images that are stored in the recording medium and that constitute the entire image.

3. An imaging method comprising:
performing imaging operations with imaging direction sequentially fixed to respective unit-images that constitute the entire image representing the whole imaging area;
recording the imaged unit-image onto a recording medium;
detecting a difference between a first unit-image that has newly been imaged and a second previous unit-image that has been stored in the recording medium and that is located at the same position as the first unit-image;
performing, when a difference is detected between the first and second unit-images, imaging operations for the first unit-image and its surrounding unit-images; and
sequentially recording the newly imaged unit-images onto the recording medium.

4. The imaging method according to claim 3, wherein the entire image is newly formed by using the newly imaged unit-images for update among the unit-images that are stored in the recording medium and that constitute the entire image.

5. An imaging apparatus comprising:
imaging means for performing imaging operations with imaging direction sequentially fixed to respective unit-images that constitute the entire image representing the whole imaging area;
recording means for recording the imaged unit-image onto a recording medium;
movement determination means for determining presence/absence of a movement between a first unit-image that has newly been imaged and a second unit-image that constitutes the previous entire image and that is located in the same imaging direction as the first unit-image; and
control means for controlling at least the above respective means, wherein
when it is determined that a movement exists between the first and second unit-images by the movement determination detection means, the imaging means performs imaging operations for the next entire image with the imaging direction fixed to the first unit-image and its surrounding unit-images, and
the recording means sequentially records, onto the recording medium, the unit-images that have been imaged in the above manner by the imaging section.

6. The imaging apparatus according to claim 5 further comprising display means for displaying the entire image formed by the imaged unit-images, wherein
when it is determined that a movement exists between the first and second unit-images by the movement determination means, the display means updates frames with the newly imaged unit-images for displaying the next entire image.

7. The imaging apparatus according to claim 6 further comprising designation means for a user to designate the image area on the entire image displayed on the display means, wherein
the display means reads out a unit-image recorded in the recording medium in accordance with the image area designated by the designation means, and displays it in an enlarged manner.

8. The imaging apparatus according to claim 5, wherein the movement determination means calculates a differential value of luminance component between unit-images between which presence/absence of a movement is determined, and determines that a movement exists when the calculated differential value exceeds a predetermined threshold value.

9. The imaging apparatus according to claim 8, further comprising adjustment means for adjusting the predetermined threshold value.

10. The imaging apparatus according to claim 5, wherein the imaging means performs imaging operations with imaging direction sequentially changed so that the unit-images are overlapped with each other.

11. An imaging method comprising:
performing imaging operations with the imaging direction sequentially fixed to respective unit-images that constitute the entire image representing the whole imaging area;
recording the imaged unit-image onto a recording medium;
determining presence/absence of a movement between a first unit-image that has newly been imaged and a second unit-image that constitutes the previous entire image and that is located in the same imaging direction as the first unit-image; and
performing, when a movement exists between the first and second unit-images, imaging operations for the next entire image with the imaging direction fixed to the first unit-image and its surrounding unit-images, and
sequentially recording the unit-images that have been imaged in the above manner in the recording medium.

12. An imaging system comprising:
an imaging apparatus which performs imaging operations with imaging direction sequentially fixed to respective unit-images that constitute the entire image representing the whole imaging area;
a control unit which records the unit-image imaged by the imaging apparatus in a recording medium, and determines presence/absence of a movement between a first unit-image that has newly been imaged and a second unit-image that constitutes the previous entire image and that is located in the same imaging direction as the first unit-image; and
a user terminal which can access the recording medium, wherein
when it is determined that a movement exists between the first and second unit-images by the control unit, the imaging apparatus performs imaging operations for the next entire image with imaging direction fixed to the first unit-image and its surrounding unit-images, and
the control unit sequentially records the unit-images that have been imaged in the above manner by the imaging apparatus onto the recording medium.

13. A program which allows a computer to:
perform imaging operations with imaging direction sequentially fixed to respective unit-images that constitute the entire image representing the whole imaging area;
record the imaged unit-image onto a recording medium;
determine presence/absence of a movement between a first unit-image that has newly been imaged and a second unit-image that constitute the previous entire image and that is located in the same imaging direction as the first unit-image;
perform, when a movement exists between the first and second unit-images, imaging operations for the next entire image with the imaging direction fixed to the first unit-image and its surrounding unit-images, and
sequentially record the unit-images that have been imaged in the above manner in the recording medium.
